# EUROPEAN PATENT APPLICATION

(11) **EP 4 036 072 A1**
(43) Date of publication of application: **03.08.2022**
(21) Application number: 20869722.7
(22) Date of filing: 11.09.2020
(51) Int. Cl.: C04B 35/58, C04B 35/584, H05B 3/10, C04B 35/622, H05B 3/14

(54) **COMPOSITE TYPE MATERIAL FOR CERAMIC ELECTRIC HEATING BODY**

(30) Priority: 25.09.2019 CN 201910912107
(71) Applicant: Chongqing Le-Mark Ceramic Technology Co., Ltd., Chongqing 401329 (CN)
(72) Inventor: LEIGH, Peter, Chongqing 401329 (CN)
(74) Representative: Angerhausen, Christoph
(86) International application number: PCT/CN2020/114756
(87) International publication number: WO 2021/057512

(57) **Abstract**

Disclosed is a composite material for a ceramic electric heating element. Components for the preparation of the composite material include silicon nitride, molybdenum disilicide, silicon carbide, yttrium oxide, aluminum oxide and lanthanum oxide. The composite material of the disclosure can be used to make the impulse current of a ceramic electric heating element small.

## Description

### Technical Field

The disclosure relates to a composite material, and in particular to a composite material for a ceramic electric heating element.

### Background

As a conducting material, a ceramic electric heating element may be used as an electric heating element of an ignition mechanism, and igniting or heating is realized by an extremely high temperature reached at the moment of the electrification of ceramic. It may be used in the fields of engine ignition, gas stove ignition, water heater ignition, infrared radiation source, oxygen sensor heating, soldering iron tip heating and the like. The electric heating element of a ceramic material has the advantages of fast start-up, high temperature resistance, corrosion resistance, high strength and long service life and the like.

Chinese patent CN100484337C discloses a multilayer circular ceramic electric heating element and a preparation process thereof, and specifically discloses that a resistance layer, an insulating layer and a conducting layer of the ceramic electric heating element comprise four components: Si₃N₄, Al₂O₃, Y₂O₃, and MoSi₂; Si₃N₄ is used to form a network structure, Al₂O₃ and Y₂O₃ are used to adjust the network structure, and MoSi₂ is used to form a conductive heating material.

A ceramic electric heating element prepared with the described components provides a high reaction speed, high temperature, short time for reaching a desired temperature, long service life, high yield of a manufacturing process, and low manufacturing cost.

However, a composite material prepared with the preparation materials listed in the described patent still have the following problems in some usage scenarios: the large temperature coefficient of resistance and large impulse current directly increase the cost of power supply, and the rapid change speed of current/resistance causes the algorithm for power control to be complicated.

### Summary

An object of the disclosure is to provide a composite material with a small impulse current, and reduce application costs of a ceramic electric heating element prepared by using the material.

In order to achieve the described object, the disclosure suggests: a composite material for a ceramic electric heating element, characterized in that: components for the preparation of the composite material include silicon nitride, molybdenum disilicide, silicon carbide, yttrium oxide, aluminum oxide and lanthanum oxide. Herein, silicon nitride, molybdenum disilicide and silicon carbide are main functional materials, and aluminum oxide, yttrium oxide and lanthanum oxide are auxiliary materials.

In order to further reduce the impulse current, the composite material is prepared with the components in following proportions: silicon nitride : silicon carbide : molybdenum disilicide : yttrium oxide : lanthanum oxide : aluminum oxide = (200-900) : (50-900) : (500-2800) : (40-100) : (10-90) : (5-80).

Further, the composite material is prepared with the following material parts in following proportions: silicon nitride: silicon carbide: molybdenum disilicide : yttrium oxide : lanthanum oxide : aluminum oxide = (300-800) : (400-900) : (800-2800) : (40-100) : (30-90) : (5-80). The composite material prepared by using the described material parts is suitable as a heating layer of the ceramic electric heating element.

Further, the composite material is prepared with the following material parts in following proportions: silicon nitride : silicon carbide : molybdenum disilicide : yttrium oxide : lanthanum oxide : aluminum oxide = (400-900) : (50-200) : (500-800) : (40-90) : (30-80) : (5-60). The composite material prepared by using the described material parts is suitable as an insulating layer of the ceramic electric heating element.

Further, the composite material is prepared with the following material parts in following proportions: silicon nitride: silicon carbide: molybdenum disilicide, yttrium oxide: lanthanum oxide: aluminum oxide = (200-700) : (100-700) : (600-1500) : (40-80) : (10-70) : (5-50). The composite material prepared by using the described material parts is suitable as a conducting layer of the ceramic electric heating element.

Preferably, the main functional materials further include tungsten carbide.

Preferably, the auxiliary materials further include ytterbium oxide.

A ceramic electric heating element is prepared by using the described composite material.

### Beneficial effect:

The composite material and the ceramic electric heating element of the disclosure has the following advantages:
1. Different Temperature Coefficients of Resistance (TCRs) are achieved, and arbitrary conversion from a negative temperature coefficient to a positive temperature coefficient is achieved, so that not only TCR=-500 but also TCR=5000 can be achieved, meanwhile various performance advantages of the original ceramic material are guaranteed, such as quick start-up, high temperature resistance, corrosion resistance, and high strength.
2. Small impulse current: the impulse current is small while the temperature coefficient of resistance TCR is large, and the impulse current is also small while the temperature coefficient of resistance TCR is small. For negative or low TCR, because of the reduction of the starting current, the costs of supporting power supply and control element may be greatly reduced. In this way, problems of high cost of the supporting control electronic element of the original ceramic structure material element in actually using and difficult control the supporting control electronic element are effectively solved, and a similar performance index of the international ceramic material structure element is achieved. For example, 100 W of the power supply used previously may be replaced with a power supply of 60 W through the use of the material of the disclosure, reducing the requirement for power supply capacity.

### Detailed Description of the Embodiments

The disclosure is described below through embodiments shown in drawings, but the disclosure is not limited to the described implementation modes. Any improvements or replacements within the basic spirit of the embodiment still belong to the scope of protection of the claims of the disclosure.

Embodiment: A composite material, wherein components for the preparation thereof include silicon nitride (Si₃N₄), molybdenum disilicide (MOSi₂), silicon carbide (SiC), yttrium oxide (Y₂O₃), aluminum oxide (Al₂O₃) and lanthanum oxide (La₂O₃). Herein, silicon nitride, molybdenum disilicide and silicon carbide are main functional materials, and provide high-temperature performance, heating performance, electrical conductivity and the like when the ceramic electric heating element has been prepared with the composite material. Aluminum oxide, yttrium oxide and lanthanum oxide are auxiliary materials, and mainly help to assist ceramic sintering, to improve the strength at room temperature and high temperature, and to improve high temperature oxidation resistance and the like while preparing the ceramic electric heating element with the composite material.

Herein, the composite material is prepared with the components in following proportions: silicon nitride silicon carbide: molybdenum disilicide : yttrium oxide: lanthanum oxide : aluminum oxide = (200-900) : (50-900) : (500-2800) : (40-100) : (10-90) : (5-80); and different proportions of parts for the preparation can be chosen and are not limited to:
For example, silicon nitride : silicon carbide : molybdenum disilicide : yttrium oxide : lanthanum oxide : aluminum oxide = 200 : 50 : 500 : 40 : 10 : 5;
For example, silicon nitride : silicon carbide : molybdenum disilicide : yttrium oxide : lanthanum oxide : aluminum oxide = 200 : 400 : 500 : 40 : 10 : 5;
For example, silicon nitride : silicon carbide : molybdenum disilicide : yttrium oxide : lanthanum oxide : aluminum oxide = 200 : 50 : 1000 : 40 : 10 : 5;
For example, silicon nitride : silicon carbide : molybdenum disilicide : yttrium oxide : lanthanum oxide : aluminum oxide = 200 : 50 : 500 : 80 : 10 : 5;
For example, silicon nitride : silicon carbide : molybdenum disilicide : yttrium oxide : lanthanum oxide : aluminum oxide = 200 : 50 : 500 : 40 : 50 : 5;
For example, silicon nitride : silicon carbide : molybdenum disilicide : yttrium oxide : lanthanum oxide : aluminum oxide = 200 : 50 : 500 : 40 : 10 : 50;
For example, silicon nitride : silicon carbide : molybdenum disilicide : yttrium oxide : lanthanum oxide : aluminum oxide = 500 : 50 : 500 : 40 : 10 : 5;
For example, silicon nitride : silicon carbide : molybdenum disilicide : yttrium oxide : lanthanum oxide : aluminum oxide = 400 : 800 : 500 : 55 : 70 : 76;
For example, silicon nitride : silicon carbide : molybdenum disilicide : yttrium oxide : lanthanum oxide : aluminum oxide = 600 : 700 : 1200 : 70 : 30 : 20;
For example, silicon nitride : silicon carbide : molybdenum disilicide : yttrium oxide : lanthanum oxide : aluminum oxide = 800 : 70 : 2100 : 67 : 60 : 35;
For example, silicon nitride : silicon carbide : molybdenum disilicide : yttrium oxide : lanthanum oxide : aluminum oxide = 900 : 900 : 2800 : 100 : 90 : 80.

Herein, the composite material in the embodiment may be used to prepare the ceramic electric heating element, and the ceramic electric heating element in the embodiment is a multilayer ceramic electric heating element, including but not limited to a heating layer, an insulating layer, and a conducting layer and the like.

For the heating layer, the composite material prepared with the following material parts in following proportions may be used: silicon nitride : silicon carbide : molybdenum disilicide : yttrium oxide : lanthanum oxide : aluminum oxide = (300-800) : (400-900) : (800-2800) : (40-100) : (30-90) : (5-80).

Different proportions of parts may be chosen for the preparation but are not limited to:
For example, silicon nitride : silicon carbide : molybdenum disilicide : yttrium oxide : lanthanum oxide : aluminum oxide = 300 : 400 : 800 : 40 : 30 : 5;
For example, silicon nitride : silicon carbide : molybdenum disilicide : yttrium oxide : lanthanum oxide : aluminum oxide = 400 : 800 : 1800 : 50 : 60 : 20;
For example, silicon nitride : silicon carbide : molybdenum disilicide : yttrium oxide : lanthanum oxide : aluminum oxide = 600 : 700 : 2000 : 80 : 70 : 70;
For example, silicon nitride : silicon carbide : molybdenum disilicide : yttrium oxide : lanthanum oxide : aluminum oxide = 700 : 4, 500 : 1200 : 60 : 70 : 70;
For example, silicon nitride : silicon carbide : molybdenum disilicide : yttrium oxide : lanthanum oxide : aluminum oxide = 800 : 900 : 2800 : 100 : 90 : 80.

For the insulating layer, the composite material prepared with the following material parts in following proportions may be used: silicon nitride : silicon carbide : molybdenum disilicide : yttrium oxide : lanthanum oxide : aluminum oxide = (400-900) : (50-200) : (500-800) : (40-90) : (30-80) : (5-60).

Different proportions of parts may be chosen for the preparation but are not limited to:
For example, silicon nitride : silicon carbide : molybdenum disilicide : yttrium oxide : lanthanum oxide : aluminum oxide = 400 : 50 : 500 : 40 : 30 : 5;
For example, silicon nitride : silicon carbide : molybdenum disilicide : yttrium oxide : lanthanum oxide : aluminum oxide = 500 : 100 : 600 : 60 : 70 : 35;
For example, silicon nitride : silicon carbide : molybdenum disilicide : yttrium oxide : lanthanum oxide : aluminum oxide = 700 : 150 : 700 : 50 : 40 : 30;
For example, silicon nitride : silicon carbide : molybdenum disilicide : yttrium oxide : lanthanum oxide : aluminum oxide = 800 : 90 : 650 : 70 : 40 : 50;
For example, silicon nitride : silicon carbide : molybdenum disilicide : yttrium oxide : lanthanum oxide : aluminum oxide = 900 : 200 : 800 : 90 : 80 : 60.

For the conducting layer, the composite material prepared with the following material parts in following proportions may be used: silicon nitride : silicon carbide : molybdenum disilicide : yttrium oxide : lanthanum oxide : aluminum oxide = (200-700) : (100-700) : (600-1500) : (40-80) : (10-70) : (5-50).

Different proportions of parts may be chosen for the preparation but are not limited to:
For example, silicon nitride : silicon carbide : molybdenum disilicide : yttrium oxide : lanthanum oxide : aluminum oxide = 200 : 100 : 600 : 40 : 10 : 5;
For example, silicon nitride : silicon carbide : molybdenum disilicide : yttrium oxide : lanthanum oxide : aluminum oxide = 400 : 300 : 800 : 60 : 30 : 15;
For example, silicon nitride : silicon carbide : molybdenum disilicide : yttrium oxide : lanthanum oxide : aluminum oxide = 600 : 500 : 1000 : 70 : 50 : 30;
For example, silicon nitride : silicon carbide : molybdenum disilicide : yttrium oxide : lanthanum oxide : aluminum oxide = 500 : 600 : 1300 : 50 : 60 : 45;
For example, silicon nitride : silicon carbide : molybdenum disilicide : yttrium oxide : lanthanum oxide : aluminum oxide = 700 : 700 : 1500 : 80 : 70 : 50.

As another implementation mode in the embodiment, the main functional materials further include tungsten carbide (WC).

As another implementation mode in the embodiment, the auxiliary materials further include ytterbium oxide (Yb₂O₃).

A ceramic electric heating element is prepared by using the described composite material.

Herein, the ceramic electric heating element in the embodiment is a multilayer structure from inside to outside, and has at least two or more layers. While there are two layers, the inner layer structure is a resistive layer, and the outer layer structure is a conducting layer. While it is a three-layer structure, the inner layer structure is a resistance layer, the middle layer structure is an insulating layer, and the outer layer structure is a conducting layer.

Herein, the multilayer ceramic electric heating element in the embodiment is manufactured by using a grouting mode, and includes the following steps.

Step 1: preparing mixed slurry: silicon nitride, silicon carbide, molybdenum disilicide, yttrium oxide, lanthanum oxide, and aluminum oxide powder are mixed with water according to a weight ratio and stirred uniformly, then loaded in a container. Herein, different mixed slurries are prepared according to different layers of the multilayer ceramic electric heating element, and loaded in different containers for standby.

As an implementation mode in the embodiment, total weight of the described material compositions: water weight = 1: (1-4).

Step 2: grouting and forming: a grouting mold of which two ends are opened is put on a grouting machine, and the mixed ceramic slurry is then injected into the grouting machine to start grouting and forming. According to the number of layers of the ceramic electric heating element, the grouting is performed in stages, and the grouting is sequentially performed from the outer layer to the inner layer.

Step 3: sintering: a dried water-lost ceramic element is taken out from the grouting mold, and put into a sintering mold, finally, the sintering mold loaded with the ceramic blank is put into a sintering furnace for sintering, and sintered for 7-12 hours at a temperature of 1400°C and a pressure of 2000-5000 Kpa.

Step 4: the sintered ceramic material element is taken out from the sintering mold, external trimming is performed, and electrode assembly is performed.

Different TCRs are achieved by using the ceramic electric heating element manufactured by the composite material of the embodiment, and arbitrary conversion from a negative temperature coefficient to a positive temperature coefficient is achieved, so that not only TCR=-500 may be achieved, but also TCR=5000 may be achieved, meanwhile various performance advantages of the original ceramic material are guaranteed, such as quick start-up, high temperature resistance, corrosion resistance, and high strength.

Small impulse current: the impulse current is small while the temperature coefficient of resistance TCR is large, and the impulse current is also small while the temperature coefficient of resistance TCR is small. For negative or low TCR, because of the reduction of the starting current, the costs of supporting power supply and control element may be greatly reduced. In this way, problems of high cost of the supporting control electronic element of the original ceramic structure material element in actually using and difficult control are effectively solved, and a similar performance index of the international ceramic material structure element is achieved.

## Claims

1. A composite material for a ceramic electric heating element, wherein components for the preparation of the composite material include silicon nitride, molybdenum disilicide, silicon carbide, yttrium oxide, aluminum oxide and lanthanum oxide.

2. The composite material according to claim 1, wherein the composite material is prepared with the components in following proportions: silicon nitride : silicon carbide : molybdenum disilicide : yttrium oxide : lanthanum oxide : aluminum oxide = (200-900) : (50-900) : (500-2800) : (40-100) : (10-90) : (5-80).

3. The composite material according to claim 2, wherein it is prepared with the following material parts in following proportions: silicon nitride : silicon carbide : molybdenum disilicide : yttrium oxide : lanthanum oxide : aluminum oxide = (300-800) : (400-900) : (800-2800) : (40-100) : (30-90) : (5-80).

4. The composite material according to claim 2, wherein it is prepared with the following material parts in following proportions: silicon nitride : silicon carbide : molybdenum disilicide : yttrium oxide : lanthanum oxide : aluminum oxide = (400-900) : (50-200) : (500-800) : (40-90) : (30-80) : (5-60).

5. The composite material according to claim 2, wherein it is prepared with the following material parts in following proportions: silicon nitride : silicon carbide : molybdenum disilicide : yttrium oxide : lanthanum oxide : aluminum oxide = (200-700) : (100-700) : (600-1500) : (40-80) : (10-70) : (5-50).

6. The composite material according to claim 1, 2, 3, 4 or 5, wherein the main functional materials further include tungsten carbide.

7. The composite material according to claim 1, 2, 3, 4 or 5, wherein the auxiliary materials further include ytterbium oxide.

8. The composite material according to claim 6, wherein the auxiliary materials further include ytterbium oxide.

9. A ceramic electric heating element, wherein it is manufactured by using a composite material according to any one of the preceding claims.
